# FASCICULE DE BREVET EUROPEEN

(11) **EP 0 600 017 B1**
(45) Date de publication et mention de la délivrance du brevet: **17.07.1996**
(21) Numéro de dépôt: 92919004.9
(22) Date de dépôt: 21.08.1992
(51) Int. Cl.: E02D 19/18, B09B 1/00

(54) **BARRIERE SOUTERRAINE ANTI-POLLUTION**
UNTERIRDISCHE VERSEUCHUNGSVERHUETENDE BARRIERE
UNDERGROUND POLLUTION CONTROL BARRIER

(30) Priorité: 21.08.1991 FR 9110486
(43) Date de publication de la demande: 08.06.1994
(73) Titulaire: COMPAGNIE DU SOL, F-92000 Nanterre (FR)
(72) Inventeur: BOUCHELAGHEM, Abdelkrim, F-75019 Paris (FR)
(74) Mandataire: Nony, Michel
(86) Numéro de dépôt international: FR9200815
(87) Numéro de publication internationale: WO9304237

(56) Documents cités:
- EP-A- 0 198 666
- DE-A- 2 803 531
- DE-A- 3 629 768
- US-A- 4 883 589

## Description

La présente invention a pour objet une barrière souterraine anti-pollution.

On sait que les déchets polluants de diverses natures qui sont stockés dans le sol peuvent se trouver entraînés par les eaux de ruissellement et polluer d'autres terrains ainsi que les eaux qui circulent sur ou à l'intérieur de ceux-ci.

Ce problème est d'autant plus préoccupant que bien souvent, les déchets en question ont été déposés sur le sol ou enfouis à l'intérieur de celui-ci sans prendre aucune précaution particulière ou tout au moins des précautions insuffisantes.

Il est déjà connu de réaliser autour de tels dépôts de déchets polluants des écrans ou barrières constitués par des parois moulées dans le sol qui s'étendent à une profondeur suffisante pour rencontrer une couche de terrain étanche et qui entourent les matières polluantes de manière à éviter, ou à tout le moins limiter la circulation d'eau polluée allant des produits polluants vers le terrain environnant.

Ces parois moulées sont réalisées par des techniques conventionnelles en excavant une tranchée, le plus souvent sous boue bentonitique, et en garnissant ensuite cette tranchée avec un matériau à base de liant hydraulique présentant une faible perméabilité.

Il est également connu de réaliser de telles parois moulées qui se veulent imperméables à l'eau en incorporant dans la paroi une feuille continue de matière plastique constituée par exemple par du polyéthylène haute densité de manière à éviter que l'eau contenant les produits polluants puisse traverser la paroi moulée.

Ces parois moulées dont l'étanchéité est assurée par une feuille de matière synthétique présentent l'inconvénient d'être totalement étanches et de ne pas permettre la réalisation d'un équilibre entre l'eau contenue dans le sol au voisinage de la source de pollution et l'eau qui se trouve à l'extérieur de la zone protégée. De surcroît, la réunion des différents éléments de feuilles de matière synthétique pose des problèmes techniques qui n'ont pas toujours été résolus avec une compléte efficacité.

Une paroi de ce type est décrite dans le document EP-A-0198666 qui concerne une barrière constituée par une paroi moulée comportant des zones successives munies d'un moyen assurant leur étanchéité, ces zones étant réunies par des cavités d'où les déchets polluants peuvent être extraits par pompage.

Il est également connu de réaliser ces parois moulées à l'aide d'un matériau qui contient des composants chimiques permettant de retenir par adsorption ou par réaction chimique les différents types de polluants tels que les métaux lourds, les radio-éléments ou les micro-polluants organiques.

Ces parois moulées qui jouent en fait le rôle de filtres, se chargent progressivement en substances polluantes de telle sorte qu'après un certain temps, il est nécessaire de reconstituer les écrans en parois moulées qui deviennent insuffisamment étanches vis-à-vis des matières polluantes.

Le présente invention a pour objet une barrière souterraine anti-pollution, du type constitué par une paroi moulée dans le sol dont la profondeur atteint une couche de terrain étanche, ladite paroi moulée comportant des zones successives qui sont munies d'un moyen assurant l'étanchéité transversale de la paroi, ces zones étant réunies entre-elles par des cavités verticales réalisées dans l'épaisseur de la paroi, caractérisée par le fait que lesdites cavités reçoivent au moins un matériau qui se présente de préférence sous la forme de granulat et qui présente la propriété de retenir les déchets polluants contenus dans les eaux polluées qui traversent la barrière à l'endroit desdites cavités et en ce que ce matériau peut être facilement remplacé lorsque l'on observe une diminution sensible de sa capacité de rétention.

Le principe selon lequel fonctionne l'invention consiste à faire en sorte que les eaux polluées traversent la barrière anti-pollution à des endroits prédéterminés où elles peuvent s'écouler à travers un matériau facilement remplaçable qui est susceptible de capter les polluants.

Dans un mode de réalisation préféré de l'invention, les zones étanches pouvent être avantageusement constituées en plaçant à l'intérieur de la paroi moulée des feuilles continues de matière synthétique par exemple de polyéthylène de haute densité ayant une épaisseur par exemple de quelques millimètres.

La pose de ces feuilles de matière synthétique ne présente aucune difficulté particulière du fait qu'elles sont continues et qu'il n'est pas nécessaire qu'elles soient raccordées de manière étanche aux feuilles voisines.

Ces feuilles peuvent être facilement descendues dans la tranchée avant solidification du coulis.

Conformément à l'invention, on réalise des cavités verticales de dimension appropriée dans les bords verticaux de deux feuilles contigues en matériau synthétique, et l'on place à l'intérieur de ces cavités un matériau, de préférence sous forme de granulat, qui a la faculté de retenir les substances polluantes par exemple, par adsorption ou par voie chimique.

Selon un mode de réalisation préféré de l'invention, il est avantageux de placer les substances en question dans une poche perméable à l'eau, ce qui facilite l'enlèvement des matières qui retiennent les polluants lorsqu'il est nécessaire de les remplacer.

Conformément à l'invention, il est également avantageux de réaliser la barrière en moulant dans la tranchée un coulis à base de liant hydraulique présentant une faible perméabilité, par exemple inférieure à 10⁻⁷ ou 10⁻⁸ mètres par seconde.

Dans une variante, on peut également introduire dans la composition du coulis des composés permettant d'assurer une adsorption ou une fixation chimique des différents types de polluants.

Ces composés peuvent être par exemple constitués par du charbon actif, du carbonate ou du pyrophosphate de sodium ou encore du tartrate de potassium.

Dans le but de mieux faire comprendre l'invention, on va en décrire maintenant à titre d'illustration et sans aucun caractère limitatif, un mode de réalisation pris comme exemple et représenté sur le dessin annexé.

Sur ce dessin,
- la figure 1 est une vue d'une barrière selon l'invention en coupe verticale selon I-I de la figure 2,
- la figure 2 est une vue en coupe à plus grande échelle selon II-II de la figure 1,
- la figure 3 est une vue en coupe à plus grande échelle selon III-III de la figure 2.

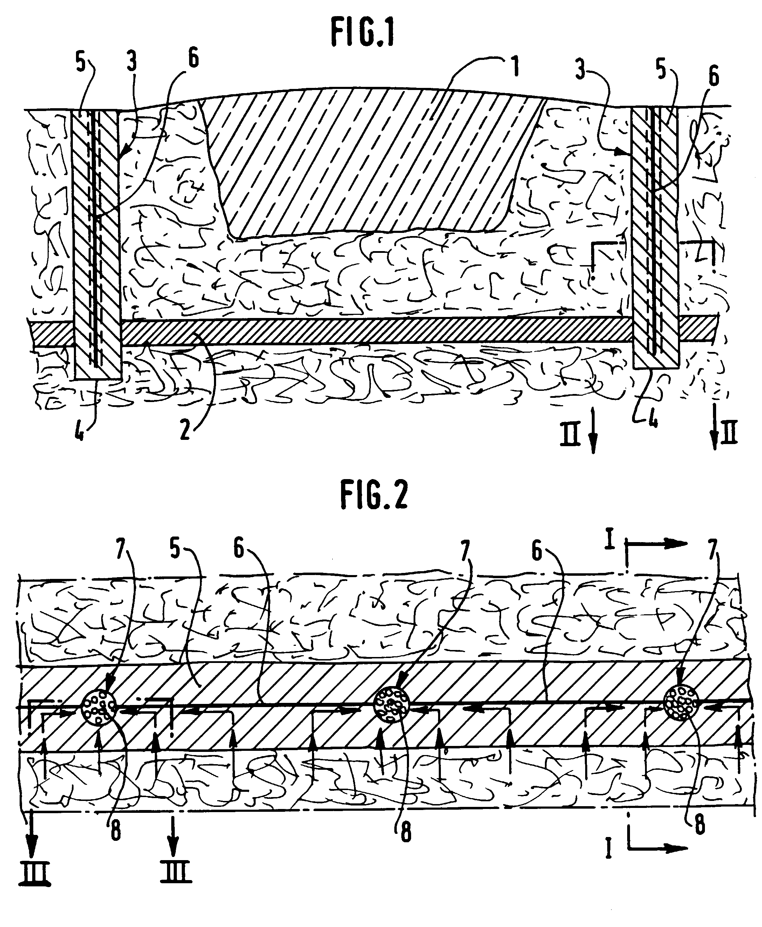

On a représenté sur la figure 1, un dépôt 1 de déchets polluants qui, par délavage se dispersent dans le terrain avoisinant.

Une couche de terrain étanche 2 est située en dessous des produits polluants 1. Cette couche 2 peut être soit une couche naturelle constituée par exemple par de l'argile soit une couche réalisée par injection dans le sol de produits d'étanchéification.

Conformément à l'invention, on réalise autour des déchets polluants une barrière continue 3 qui est constituée par un coulis durcissant réalisé dans une tranchée dont la partie inférieure 4 atteint ou traverse la couche de terrain étanche 2. Cette paroi en coulis 5 est avantageusement réalisée en un matériau présentant une faible perméabilité qui peut être par exemple inférieure à 10⁻⁸ mètres par seconde.

La barrière ainsi formée comporte selon l'invention, des éléments de feuilles continues 6 en matière synthétique qui sont étanches aux liquides.

Comme on peut le voir sur la figure 2, ces éléments de feuilles 6, contrairement à l'état de la technique, ne sont pas réunis entre eux de manière étanche mais aboutissent dans des cavités 7 qui sont réalisées verticalement dans la paroi moulée.

Ces cavités 7 sont remplies d'un matériau 8 avantageusement sous forme de granulats, qui présente la particularité de capter par adsorption ou par réaction chimique les polluants qui sont délavés à partir de la masse 1.

Comme cela était représenté schématiquement par des flèches sur la figure 2, l'eau qui s'écoule à travers la barrière selon l'invention (à partir de la partie inférieure de la figure 2 où se trouvent les déchets polluants), ne peut franchir les éléments de feuille en matière plastique 6 et se trouve rabattue vers les cavités 7 qui contiennent le matériau rétenseur 8.

On voit que le dispositif selon l'invention, qui est d'une réalisation facile, assure une sécurité multiple.

Tout d'abord, la paroi moulée 5 présente en elle-même une faible perméabilité et elle capte les polluants qui seraient amenés à la traverser. Cette fonction s'exerce tout d'abord du côté de la barrière qui est située vers les déchets polluants et à titre de sécurité supplémentaire dans l'hypothèse où une feuille de matière plastique 6 viendrait à être perforée ou encore dans le cas où les matériaux absorbants 8 ne seraient pas renouvelés alors qu'ils auraient dû l'être.

En second lieu, les éléments de feuille 6 qui sont étanches ont pour effet d'intercepter et de diriger le faible écoulement d'eau qui se produit à travers la paroi (partie inférieure telle que représentée sur la figure 2) vers les cavités 7 où les polluants sont retenus par les produits rétenseurs 8 qui se présentent sous un volume relativement restreint et qui peuvent être facilement remplacés lorsque cela est nécessaire.

On voit que, conformément à l'invention, on concentre les déchets polluants dans des endroits bien déterminés où ils sont captés par un volume relativement faible de produits rétenseurs qui peuvent être facilement changés chaque fois que cela est nécessaire.

Il en résulte également que les produits rétenseurs qui présentent un faible volume peuvent être facilement détruits par exemple par incinération ou retraités ou encore stockés pour ne plus présenter aucun danger.

On a représenté sur la figure 8 une coupe à plus grande échelle selon VIII-VIII de la figure 2.

On retrouve sur cette coupe la couche isolante 2 qui est constituée par exemple par de l'argile naturellement étanche à l'eau.

La paroi moulée 5 pénètre dans la couche d'argile 2 sur une certaine profondeur de manière à assurer l'étanchéité à la base de la barrière.

On voit également comment les éléments de feuilles 6 viennent jusqu'à la paroi de la cavité verticale 7 qui est réalisée conformément à l'invention.

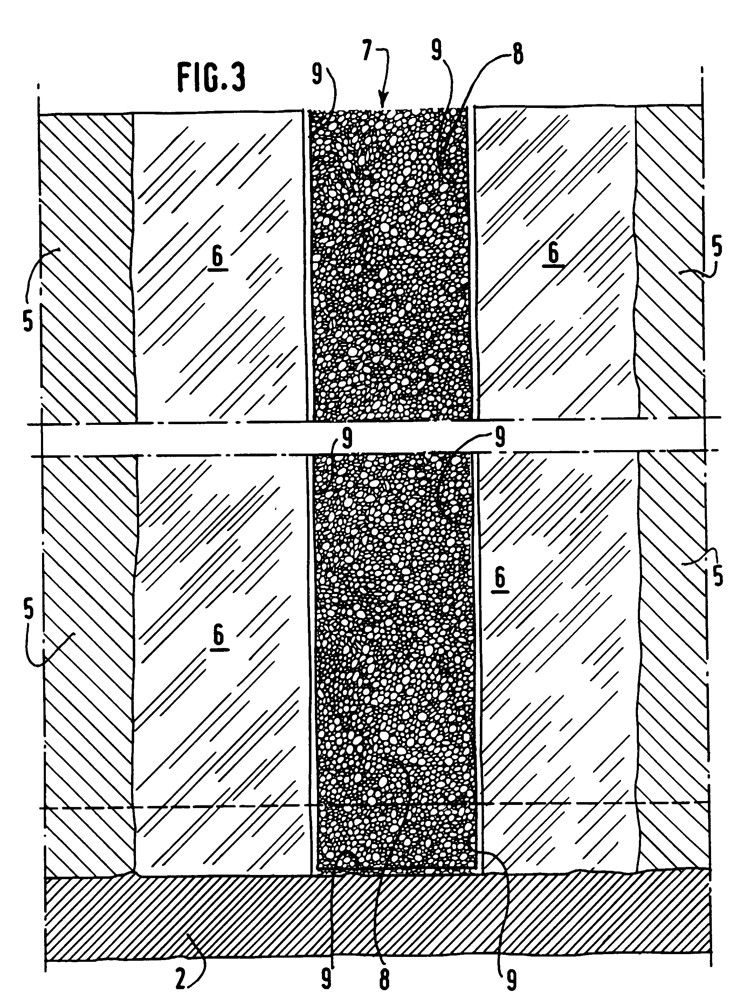

Sur la figure 3 les bords des feuilles 6 opposées à la cavité 7 ont été découpés pour laisser voir la partie de la paroi moulée 5 qui est située derrière.

Une poche 9 réalisée en un matériau perméable à l'eau est disposée à l'intérieur de la cavité 7 pour recevoir les matériaux rétenseurs des déchets polluants.

Cette poche 9 présente l'avantage de faciliter l'extraction des matériaux rétenseurs 8 lorsque ceux-ci doivent être remplacés.

Il est clair cependant que l'on ne sortirait pas du cadre de l'invention en plaçant les matériaux rétenseurs 8 directement dans la cavité 7 bien qu'avec cette manière de faire l'enlèvement de ces matériaux en vue de leur remplacement soit moins aisé.

Conformément à l'invention, il est également possible de garnir les orifices 7 à l'aide d'un matériau rétenseur se présentant sous forme d'un coulis durcissant mais dans ce cas, lors du remplacement de ce matériau, il est nécessaire de procéder à un enlèvement de ce dernier par voie mécanique, par exemple en recreusant un orifice 7 à l'aide d'une terrière.

Dans le but de mieux faire comprendre l'invention on va en donner maintenant quelques exemples de mise en oeuvre.

### EXEMPLE 1

Pour réaliser une barrière de protection autour de déchets polluants constitués essentiellement par des résidus industriels susceptibles de relâcher des métaux lourds tels que du plomb, du cadmnium, du chrome ou du mercure, on réalise une paroi moulée avec un coulis qui a la composition suivante :
- eau 1000 litres
- ciment 250 kgs
- argile 45 kgs

On place sensiblement au milieu de la paroi, et avant durcissement du coulis une succession de feuilles en polyéthylène de haute densité ayant une épaisseur de 1,5 mm et une longueur d'environ 2 mètres.

Entre les extrémités de deux feuilles contigues on réalise des cavités soit par forage dans le coulis, soit à l'aide d'un dispositif permettant de réaliser une réservation. Ces cavités ont un diamètre d'environ 20 cm et une profondeur correspondant à celle de la barrière.

Les cavités sont réalisées de telle manière que les feuilles en polyéthylène viennent jusqu'au bord des cavités.

Conformément à un mode de réalisation préféré de l'invention, on place à l'intérieur de chaque cavité une poche réalisée en un matériau synthétique perméable dont les dimensions sont sensiblement égales à celles de la cavité, et l'on remplit ces poches à l'aide d'un matériau constitué par des granulés dont les dimensions sont d'environ 0,2 à 5 mm, et dont la composition est la suivante :
- Eau 1000 litres
- Ciment 250 à 1000 kgs
- Argile 30 à 300 kgs
- Carbonate de sodium 0 à 10 kgs
- Pyrophosphate de sodium 2 à 10 kgs et/ou
- Tartrate de potassium 2 à 10 kgs

La perméabilité du coulis qui constitue la paroi moulée est d'environ 10⁻⁸ mètres par seconde alors que la perméabilité du matériau rétenseur est beaucoup plus grande.

L'étanchéité assurée par les feuilles en polyéthylène de haute densité entre les cavités oblige le flux d'eau contenant les éléments polluants à passer par les granulats rétenseurs. Les éléments polluants sont alors retenus par ces derniers.

Lorsque l'on désire remplacer les granulats rétenseurs, il suffit de les extraire en soulevant la poche qui les contient.

Ces granulats rétenseurs peuvent être ensuite incinérés, traités ou stockés, de manière à maitriser les éléments polluants afin qu'ils ne soient plus un danger pour l'environnement.

### EXEMPLE 2

Pour réaliser une barrière de protection autour de déchets polluants constitués essentiellement par des résidus industriels susceptibles de relâcher des métaux lourds et des micro-polluants organiques, on réalise une paroi moulée avec un coulis identique à celui de l'exemple 1.

On adopte les mêmes dispositions qu'à l'exemple 1 pour réaliser les cavités et assurer l'étanchéité entre celles-ci. De même pour la réalisation des poches devant se loger dans les cavités.

Ces poches sont également remplies par des granulés dont les dimensions sont d'environ 0,2 à 5 mm.

Dans une première variante, les granulés ont la composition suivante qui leur confère un pouvoir rétenseur pour les métaux lourds et les micro-polluants organiques.
- Eau 1000 litres
- Ciment 250 à 1000 kgs
- Argile 50 à 300 kgs
- Charbon actif 25 à 100 kgs
- Carbonate de Na 0 à 10 kgs
- Pyrophosphate de Na 2 à 10 kgs et/ou
- Tartrate de K 2 à 10 kgs

Dans une seconde variante, la poche peut être remplie par deux sortes de granulés ayant des compositions différentes.

Les premiers granulés confèrent un pouvoir rétenseur vis-à-vis des métaux lourds et ont une composition analogue à celle donnée dans l'exemple 1.

Les seconds granulés qui possèdent un pouvoir rétenseur vis-à-vis des micro-polluants organiques ont la composition suivante :
- Eau 1000 litres
- Ciment 250 à 1000 kgs
- Argile 0 à 50 kgs
- Charbon actif 25 à 100 kgs

Comme dans l'exemple 1, le flux d'eau contenant les éléments polluants transite obligatoirement par les granulats rétenseurs.

Dans la première variante, les polluants (métaux lourds et micro-polluants) sont retenus par les mêmes granulats.

Dans la seconde variante, les métaux lourds sont retenus par la première sorte de granulats et les micro-polluants organiques par la seconde.

L'intérêt de la seconde variante est qu'elle permet de séparer les sites de rétention en fonction de leur sélectivité vis-à-vis des polluants (métaux lourds ou micro-polluants organiques).

D'autre part, cette variante permet d'adapter facilement la répartition entre les deux sortes de granulés suivant les proportions respectives en métaux lourds et des micro-polluants organiques contenus dans le flux d'eau devant traverser la paroi.

## Revendications

1. Barrière souterraine anti-pollution, du type constitué par une paroi moulée (3) dans le sol dont la profondeur atteint une couche de terrain étanche, ladite paroi moulée comportant des zones successives qui sont munies d'un moyen assurant l'étanchéité transversale de la paroi, ces zones étant réunies entre-elles par des cavités verticales (7) réalisées dans l'épaisseur de la paroi, caractérisée par le fait que lesdites cavités (7) reçoivent au moins un matériau (8) qui se présente de préférence sous la forme de granulat et qui présente la propriété de retenir les déchets polluants (1) contenus dans les eaux polluées qui traversent la barrière à l'endroit desdites cavités et en ce que ce matériau peut être facilement remplacé lorsque l'on observe une diminution sensible de sa capacité de rétention.

2. Barrière selon la revendication 1, caractérisée par le fait que le moyen assurant l'étanchéité transversale de la paroi sur les zones successives est constitué par des feuilles continues (6) en matière synthétique.

3. Barrière selon la revendication 2, caractérisée par le fait que les feuilles continues (6) en matière synthétique sont réalisées en polyéthylène de haute densité.

4. Barrière selon l'une quelconque des revendications précédentes, caractérisée par le fait que le matériau qui présente la propriété de retenir les déchets polluants (1) est placé dans une poche perméable à l'eau.

5. Barrière selon l'une quelconque des revendications précédentes, caractérisée par le fait que le matériau (8) susceptible de retenir les déchets polluants (1) contient du charbon actif, du carbonate ou du pyrophosphate de sodium ou encore du tartrate de potassium.

6. Barrière selon l'une quelconque des revendications précédentes, caractérisée par le fait que la paroi moulée (3) est constituée par un coulis à base de liant hydraulique présentant une faible perméabilité, par exemple inférieure à 10⁻⁸ métres par seconde.

7. Barrière selon l'une quelconque des revendications précédentes, caractérisée par le fait que la paroi moulée (3) contient un matériau susceptible de capter les polluants.

## Patentansprüche

1. Unterirdische Schadstoffsperre, bestehend aus einer ins Erdreich gegossenen Wandung (3), deren Tiefe bis auf eine undurchlässige Erdschicht reicht, wobei die gegossene Wandung aus aufeinanderfolgenden Abschnitten besteht, die mit Vorrichtungen zur Querabdichtung der Wandung ausgestattet sind, und wobei diese Abschnitte untereinander durch vertikale Hohlräume (7) verbunden sind, die innerhalb der Dicke der Wandung ausgeführt werden; **dadurch gekennzeichnet,** daß die besagten Hohlräume (7) mindestens mit einem Material (8) gefüllt sind, das bevorzugt die Form eines Granulats hat und die Eigenschaft aufweist, schädliche Stoffe (1) zu binden, die sich in dem verschmutzten Wasser befinden, das die Sperre im Bereich dieser besagten Hohlräume passiert; wobei dieses Material außerdem problemlos ausgetauscht werden kann, wenn ein deutliches Nachlassen der Absorbtionseigenschaften des Granulats festgestellt wird.

2. Unterirdische Schadstoffsperre nach Anspruch 1, **dadurch gekennzeichnet,** daß die Vorrichtungen zur Querabdichtung der Wandung in den aufeinanderfolgenden Abschnitten aus Kunststoff-Folienbahnen (6) bestehen.

3. Unterirdische Schadstoffsperre nach Anspruch 2, **dadurch gekennzeichnet,** daß die Kunststoff-Folienbahnen (6) aus Polyethylen hoher Dichte bestehen.

4. Schadstoffsperre nach einem der vorangegangenen Ansprüche, **dadurch gekennzeichnet,** daß sich das Material, das die Schadstoffe (1) bindet, in einer wasserdurchlässigen Tasche befindet.

5. Schadstoffsperre nach einem der vorangegangenen Ansprüche, **dadurch gekennzeichnet,** daß das Material (8), das die Schadstoffe (1) bindet, Aktivkohle, Natriumcarbonat, Natriumpyrophosphat oder Kaliumtartrat enthält.

6. Schadstoffsperre nach einem der vorangegangenen Ansprüche, **dadurch gekennzeichnet,** daß die gegossene Wandung (3) aus einer aushärtenden Vergußmasse mit einem hydraulischen Bindemittel besteht, wobei diese Wandung nur einen geringen Durchlässigkeitsgrad in der Größenordnung von weniger als 10⁻⁸ Meter pro Sekunde aufweist.

7. Schadstoffsperre nach einem der vorangegangenen Ansprüche, **dadurch gekennzeichnet,** daß die gegossene Wandung (3) mit einem Material ausgestattet ist, das in der Lage ist, Schadstoffe aufzunehmen.

## Claims

1. Underground pollution control barrier of the type formed by a wall (3) moulded in the ground and whose depth reaches a tight soil layer, said moulded wall having successive areas provided with a means ensuring the transverse tightness of the wall, said areas being interconnected by vertical cavities (7) formed in the thickness of the wall, characterized in that said cavities (7) receive at least one material (8) preferably in the form of a granular material and which has the property of retaining the polluting waste (1) contained in the polluted water passing through the barrier at the location of said cavities and in that said material can easily be replaced when there is a significant reduction in its retention capacity.

2. Barrier according to claim 1, characterized in that the means ensuring the transverse tightness of the wall in the successive areas is constituted by continuous, synthetic material sheets (6).

3. Barrier according to claim 2, characterized in that the continuous, synthetic material sheets (6) are made from high density polyethylene.

4. Barrier according to any one of the preceding claims, characterized in that the material having the property of retaining polluting waste (1) is placed in a water-permeable pocket.

5. Barrier according to any one of the preceding claims, characterized in that the material (8) able to retain the polluting waste (1) contains an active carbon, sodium carbonate or pyrophosphate or potassium tartrate.

6. Barrier according to one of the preceding claims, characterized in that the moulded wall (3) is constituted by a slurry based on hydraulic binder having a low permeability, e.g. below 10⁻⁸ metres per second.

7. Barrier according to one of the preceding claims, characterized in that the moulded wall (3) contains a material able to trap pollutants.
